# EUROPÄISCHE PATENTSCHRIFT

(11) **EP 0 905 539 B1**
(45) Veröffentlichungstag und Bekanntmachung des Hinweises auf die Patenterteilung: **12.11.2003**
(21) Anmeldenummer: 98117954.2
(22) Anmeldetag: 22.09.1998
(51) Int. Cl.: G02B 27/12, G02B 23/12

(54) **Einrichtung zur Erfassung mehrerer Gesichtsfelder mittels eines bildauflösenden Detektors**
Multiple field of view acquisition device using an image resolving detector
Dispositif d'acquisition d'une pluralité de champ de vision à l'aide d'un détecteur de résolution d'image

(30) Priorität: 26.09.1997 DE 19742462
(43) Veröffentlichungstag der Anmeldung: 31.03.1999
(73) Patentinhaber: Bodenseewerk Gerätetechnik GmbH, 88662 Überlingen (DE)
(72) Erfinder: Baumann, Rainer, 88662 Überlingen (DE); Giesenberg, Oliver, 88690 Uhldingen-Mühlhofen (DE); Tholl, Hans D., Dr., 88690 Uhldingen (DE)
(74) Vertreter: Weisse, Jürgen, Dipl.-Phys.

(56) Entgegenhaltungen:
- CH-A- 212 240
- US-A- 4 383 170
- US-A- 5 448 395
- US-A- 5 477 383
- US-A- 5 497 270

## Beschreibung

Die Erfindung betrifft eine Einrichtung zur Erfassung mehrerer Gesichtsfelder mittels eines bildauflösenden Detektors, bei welchem mehrere Gesichtsfelder durch ein optisches System zeitlich nacheinander auf den bildauflösenden Detektor abbildbar sind.

Ein solcher bildauflösender Detektor kann ein Matrix-Detektor mit einer zweidimensionalen Anordnung von Detektor-Elementen sein, beispielsweise ein CCD oder ein "Focal Plane Array". Mit einem solchen Matrix-Detektor kann nur eine begrenzte Anzahl von Bildpunkten entsprechend der Anzahl der Detektor-Elemente aufgelöst werden. Das gilt insbesondere für Infrarot-Detektoren, die relativ wenige Detektor-Elemente aufweisen. Wenn ein großes Gesichtsfeld auf einen solchen Matrix-Detektor abgebildet wird, leidet darunter zwangsläufig die räumliche Auflösung. Es gibt aber Anwendungen, bei denen einerseits ein relativ großes Gesichtsfeld erfaßt werden muß, um z.B. ein Ziel in diesem Gesichtsfeld zu entdecken, aber andererseits ein dieses Ziel enthaltendes, kleineres Teil-Gesichtsfeld zu betrachten, um z.B. das entdeckte Ziel zu identifizieren oder zu verfolgen.

Zur Lösung dieses Problems ist es bekannt, das Gesichtsfeld in Teil-Gesichtsfelder aufzuteilen, die nacheinander auf den Matrix-Detektor abgebildet werden. Das geschieht bei einer bekannten Lösung dadurch, daß der Matrix-Detektor mit einem abbildenden optischen System in einem Rahmensystem aufgehängt ist und das optische System nacheinander auf die verschiedenen Teil-Gesichtsfelder gerichtet wird. Es ist auch bekannt, den Strahlengang durch rotierende brechende oder spiegelnde Polygone oder oszillierende Spiegel abzulenken und dadurch die Teil-Gesichtsfelder nacheinander abzutasten.

Eine solche Anordnung ist aufwendig. Die Abtastrate ist durch die Mechanik begrenzt. Der Matrix-Detektor würde eine wesentlich höhere Abtastrate zulassen.

Durch die US-A-5 448 395 ist eine Einrichtung zur Erfassung eines Gesichtsfeldes mittels eines bildauflösenden Detektors bekannt, bei welcher durch ein Teleskop-Objektiv eine Zwischenabbildung eines von dem Teleskop-Objektiv erfaßten Gesichtsfeldes erzeugt wird. Durch eine Mehrzahl von kleinen Linsen werden verschiedene Teile der Zwischenabbildung entsprechend verschiedenen Teil-Gesichtsfeldern übereinander auf einen Matrix-Detektor abgebildet.

Der Erfindung liegt die Aufgabe zugrunde, eine Einrichtung zur Erfassung eines Gesichtsfeldes mittels eines bildauflösenden Detektors so auszubilden, daß in schneller Folge nacheinander Teil-Gesichtsfelder jeweils auf der Gesamtfläche des Detektors abgebildet werden können.

Erfindungsgemäß wird diese Aufgabe gelöst durch
(a) ein erstes abbildendes optisches System, in dessen Pupille eine Mehrzahl von Pupillen-Bereichen gebildet sind, von denen jeder ein Teil-Gesichtsfeld auf einen gemeinsamen Bildebenen-Bereich abbildet,
(b) ein in dem gemeinsamen Bildebenen-Bereich angeordnetes, strahlablenkendes, mikrooptisches Strahlablenk-Element,
(c) ein zweites abbildendes optisches System, durch welche das mikrooptische Relais auf dem bildauflösenden Detektor abbildbar ist, wobei
(d) das mikrooptische Strahlablenk-Element so ansteuerbar ist, daß es nacheinander Strahlung aus den verschiedenen Pupillen-Bereichen auf das zweite abbildende oprische System lenkt.

Nach der Erfindung ist schon das erste abbildende System in der Pupille in Pupillen-Bereiche unterteilt, so daß es die verschiedenen Teil-Gesichtsfelder übereinander auf den gemeinsamen Bildebenen-Bereich abbildet. In diesem Bildebenen-Bereich sitzt das strahlablenkende, mikrooptische Strahlablenk-Element, z.B. ein mikromechanisches Spiegel-Raster. Solche mikromechanischen Spiegel-Raster sind an sich bekannt. Sie bestehen aus einer Vielzahl von im wesentlichen in einer Ebene liegenden, mikromechanisch erzeugten Spiegel-Elementen. Die Spiegel-Elemente sind durch elektrische Signale auslenkbar. Das mikrooptische Strahlablenk-Element lenkt die einfallenden Strahlen auf ein zweites abbildendes optisches System, welches den Bildebenen-Bereich auf einen bildauflösenden Detektor, z.B. einen Matrix-Detektor abbildet. Die Auslenkung der Spiegel-Elemente erfolgt nun so, daß jeweils nur Strahlung aus einem Pupillen-Bereich des ersten abbildenden optischen Systems auf das zweite abbildende optische System gelenkt wird.

Man kann sich das am besten bei einer Umkehrung des Strahlenganges veranschaulichen: Stellt man sich den Matrix-Detektor als Lichtquelle vor, dann wird diese durch das zweite abbildende optische System auf den gemeinsamen Bildebenen-Bereich abgebildet. Die dort fokussierten und ein Bild des Matrix-Detektors erzeugenden Strahlen werden durch die Spiegel-Elemente des mikromechanischen Spiegel-Rasters je nach der Stellung der Spiegel-Elemente in die eine oder die andere Richtung abgelenkt. Das geschieht in der Weise, daß die reflektierten Strahlen jeweils durch einen der Pupillen-Bereiche des ersten abbildenden optischen Systems verlaufen. In diesem Pupillen-Bereich werden die Strahlen in das zugehörige Teil-Gesichtsfeld gelenkt. In dieses Teil-Gesichtsfeld würde der als Lichtquelle umfunktionierte Matrix-Detektor rückwärts projiziert.

Durch die Bewegung des mikrooptischen Strahlablenk-Elements wird zwischen den verschiedenen Pupillen-Bereichen und damit zwischen den einzelnen Teil-Gesichtsfeldern umgeschaltet. Wegen der geringen Trägheit des mikrooptischen Strahlablenk-Elements kann diese Umschaltung mit einer Frequenz erfolgen, die an die Auslese-Frequenz des Matrix-Detektors angepaßt ist.

Ausgestaltungen der Erfindung sind Gegenstand der Unteransprüche.

Ausführungsbeispiele der Erfindung sind nachstehend unter Bezugnahme auf die zugehörigen Zeichnungen näher erläutert.
- Fig.1: ist eine schematische, perspektivische Darstellung einer Einrichtung zur Erfassung eines Gesichtsfeldes mittels eines bildauflösenden Detektors.
- Fig.2: zeigt den aufgefalteten Strahlengang für ein Teil-Gesichtsfeld.
- Fig.3: veranschaulicht die Aufteilung der Pupille in Pupillen-Bereiche bei den Anordnungen von Fig. 1 und 2.
- Fig.4: zeigt den aufgefalteten Strahlengang für zwei Teil-Gesichtsfelder bei einer anderen Ausführung der Einrichtung zur Erfassung eines Gesichtsfeldes mittels eines bildauflösenden Detektors.

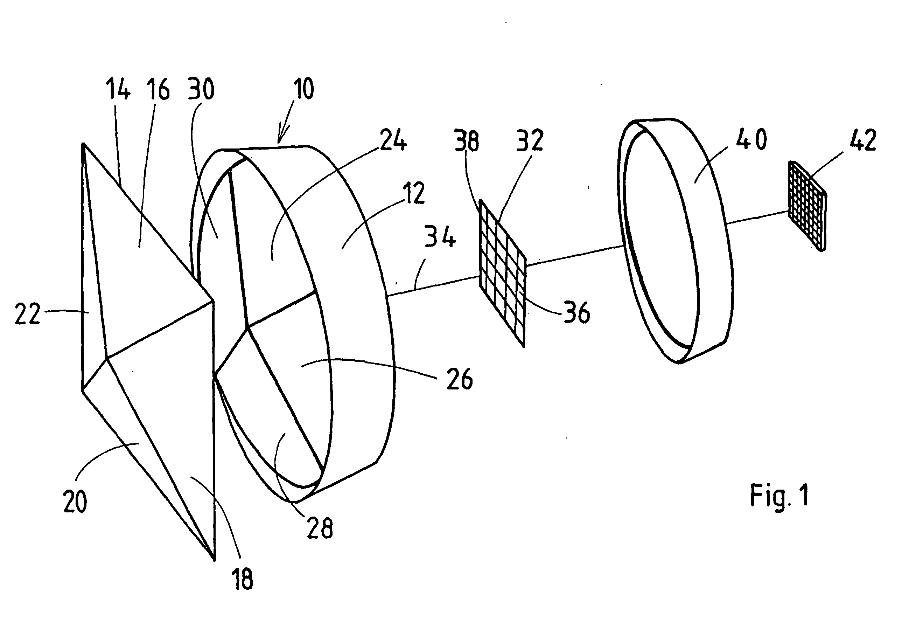

In Fig. 1 ist mit 10 ein erstes abbildendes optisches System bezeichnet. Das erste abbildende optische System 10 besteht aus einem Objektiv 12 und einer davor angeordneten Prismen-Struktur 14. Die Prismen-Struktur 14 ist eine flache, vierseitige Pyramide mit quadratischer Grundfläche und vier Seitenflächen 16, 18, 20 und 22. Durch diese Prismen-Struktur 14 ist die Pupille des Objektivs 12 in vier Pupillen-Bereiche 24, 26, 28 und 30 unterteilt. Die Prismen-Struktur bildet eine Aperturblende des optischen Systems.

Das erste abbildende optische System 10 bildet vier Teil-Gesichtsfelder eines Gesichtsfeldes übereinander auf einen Bildebenen-Bereich 32 ab. Die Ebenen der Pyramiden-Kanten der vierseitigen Pyramide liegen diagonal zu dem Bildebenen-Bereich 32.

Betrachtet man den umgekehrten Strahlengang: Ein Strahl, der von dem Bildebenen-Bereich 32 ausgeht und durch den Pupillen-Bereich 24 hindurchtritt, wird von dem durch die Fläche 16 repräsentierten Prisma nach rechts oben in Fig.1 abgelenkt. Durch den Pupillen-Bereich 24 und die Fläche 16 wird somit rückwärts der Bildebenen-Bereich 32 auf einen ein rechts oberhalb der optischen Achse 34 liegendes Teil-Gesichtsfeld abgebildet. In gleicher Weise wird ein Strahl der von dem Bildebenen-Bereich 32 ausgeht und durch den Pupillen-Bereich 26 hindurchtritt, von dem durch die Fläche 18 repräsentierten Prisma nach rechts unten in Fig.1 abgelenkt. Durch den Pupillen-Bereich 26 und die Fläche 16 wird somit rückwärts der Bildebenen-Bereich 32 auf einen ein rechts unterhalb der optischen Achse 34 liegendes Teil-Gesichtsfeld abgebildet. Umgekehrt werden alle diese Teil-Gesichtsfelder übereinander auf dem Bildebenen-Bereich 32 abgebildet.

In dem Bildebenen-Bereich 32 ist ein strahlenablenkendes, mikrooptisches Strahlablenk-Element 36 angeordnet. Dieses strahlenablenkende, mikrooptische Strahlablenk-Element kann ein mikromechanisches Spiegel-Raster sein. Ein solches Spiegel-Raster besteht aus einem mikromechanisch hergestellten Raster von Spiegel-Elementen 38. Die Spiegel-Elemente 38 können einzeln elektrisch angesteuert und in verschiedenen Richtungen geneigt werden. Sie bleiben aber dabei im wesentlichen in der Bildebene.

In Fig. ist der Strahlengang der Übersichtlichkeit halber aufgefaltet mit durchgehenden, durch das Spiegel-Raster 36 ablenkbaren Strahlen dargestellt. Man kann sich auch mikrooptische Strahlablenk-Elemente vorstellen, die in ähnlicher Weise wie das Spiegel-Raster die durchgehenden Strahlen nach Maßgabe elektrischer Signale ablenken.

Ein zweites abbildendes, optisches System 40 in Form eines Objektivs bildet den Bildebenen-Bereich 32 auf einen Matrix-Detektor 42 ab.

Die Spiegel-Elemente 38 des mikromechanischen Spiegel-Rasters (oder vergleichbare mikrooptische Elemente) werden nun so angesteuert, daß sie nacheinander nur die Strahlen aus dem Pupillen-Bereich 24, nur die Strahlen aus dem Pupillen-Bereich 26, nur die Strahlen aus dem Pupillen-Bereich 28 oder nur die Strahlen aus dem Pupillen-Bereich 30 auf das zweite abbildende, optische System lenken. Die Strahlen von den verschiedenen Pupillen-Bereichen fallen aus unterschiedlichen Richtungen auf den Bildebenen-Bereich 32 und damit auf das mikrooptische Strahlablenk-Element 36.

Damit werden von dem Matrix-Detektor 42 mit hoher Auflösung nacheinander die verschiedenen Teil-Gesichtsfelder erfaßt. Aus den nacheinander auftretenden Signalen des Matrix-Detektors 42 kann ein Bild des gesamten größeren Gesichtsfeldes "elektronisch zusammengesetzt" werden.

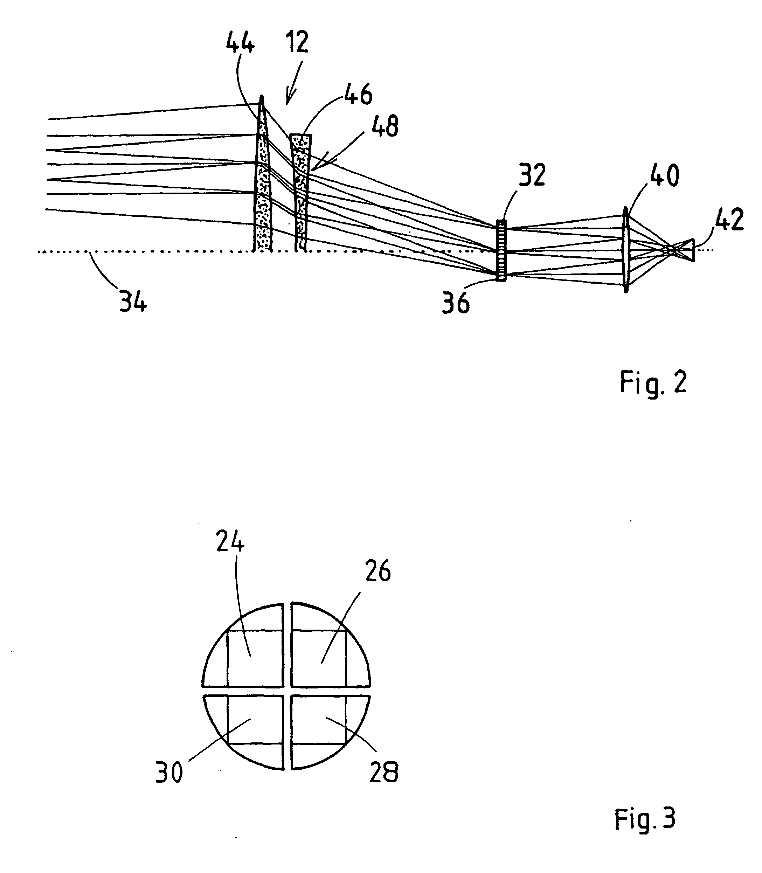

Fig.2 zeigt einen aufgefalteten Strahlengang für ein Teil-Gesichtsfeld. Das Objektiv 12 besteht aus einer Bikonvexlinse 44 und einer Bikonkavlinse 46. Das Teil-Gesichtsfeld wird durch einen oberhalb der optischen Achse 34 liegenden Pupillen-Bereich 48 auf den Bildebenen Bereich 32 mit dem mikrooptischen Strahlablenk-Element 38 abgebildet. Das mikrooptische Strahlablenk-Element 38 lenkt die Strahlen aus dem Pupillen-Bereich 48 - und nur diese- auf das zweite abbildende, optische System 40 in Form einer Linse. Das zweite abbildende optische System bildet das mikrooptische Strahlablenk-Element auf dem Matrix-Detektor 42 ab.

Fig.3 zeigt die Pupille des Objektivs 12 mit den durch die Prismen-Struktur 14 bestimmten Pupillen-Bereichen 24, 26, 28 und 30. Die Prismen-Struktur 14 stellt eine Aperturblende für das System dar.

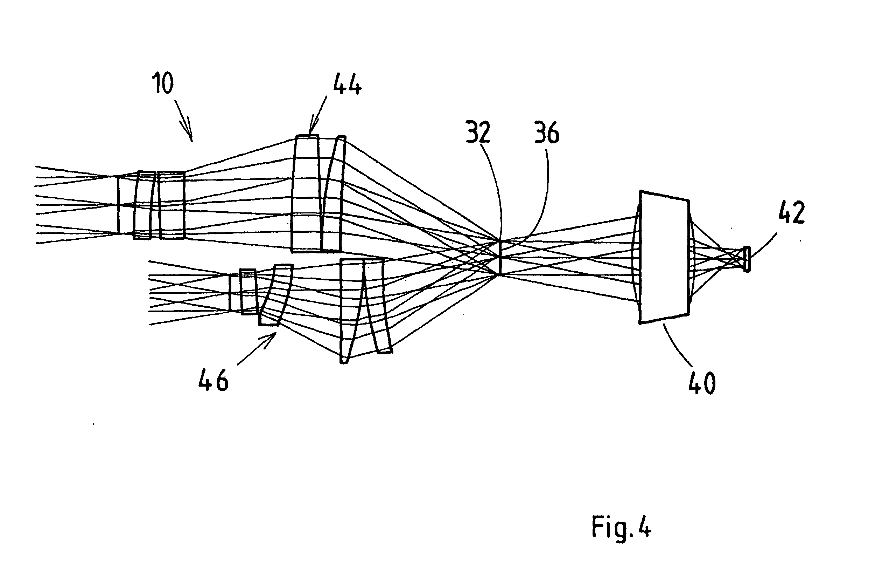

Fig.4 zeigt eine andere Ausführung einer Einrichtung zur Erfassung eines Gesichtsfeldes mittels eines bildauflösenden Detektors. Bei der Ausführung nach Fig.4 sind in dem ersten abbildenden optischen System 10 die Pupillen-Bereiche von Sektoren gebildet sind, in denen unterschiedliche sektorförmige Linsensysteme 44 und 46 angeordnet sind. Die sektorförmigen Linsensysteme 44 und 46 besitzen bei der Ausführung von Fig.4 unterschiedliche Brennweiten. Das Linsensystem 44 hat eine relativ lange Brennweite. Es erfaßt einen relativ kleinen Raumwinkel mit relativ hoher Auflösung. Das Linsensystem 46 hat eine relativ zu dem Linsensystem 44 kurze Brennweite und erfaßt einen größeren Raumwinkel. Die Linsensysteme 44 und 46 können z.B. durch eine Prismenstruktur nach Art von Fig.1 getrennten Teil-Gesichtsfeldern zugeordnet werden. Die beiden Linsensysteme 44 und 46 können aber auch zueinander konzentrische Gesichtsfelder erfassen, wobei das von dem Linsensystem 44 längerer Brennweite erfaßte Gesichtsfed innerhalb des von dem Linsensystem 46 kürzerer Brennweite erfaßten Gesichtsfeld liegt. Wichtig ist, daß beide Linsensysteme 44 und 46 ein Bild auf dem Bildebenen-Bereich mit dem mikrooptischen Strahlablenk-Element 36 erzeugen.

## Patentansprüche

1. Einrichtung zur Erfassung eines Gesichtsfeldes mittels eines bildauflösenden Detektors (42), bei welchem das Gesichtsfeld in Teil-Gesichtsfelder unterteilt wird, die durch ein optisches System zeitlich nacheinander auf den bildauflösenden Detektor (42) abbildbar sind,
**gekennzeichnet durch**
(a) ein erstes abbildendes optisches System (10), in dessen Pupille eine Mehrzahl von Pupillen-Bereichen (24,26,28,30) gebildet sind, von denen jeder ein Teil-Gesichtsfeld auf einen gemeinsamen Bildebenen-Bereich (32) abbildet,
(b) einen in dem gemeinsamen Bildebenen-Bereich (32) angeordnetes, strahlablenkendes, mikrooptisches Strahlablenk-Element (36),
(c) ein zweites abbildendes optisches System (40), **durch** welche das mikrooptische Strahlablenk-Element (36) auf dem bildauflösenden Detektor (42) abbildbar ist, wobei
(d) das mikrooptische Strahlablenk-Element (36) so ansteuerbar ist, daß es nacheinander Strahlung aus den verschiedenen Pupillen-Bereichen (24,26,28,30) auf das zweite abbildende oprische System (40) lenkt.

2. Einrichtung nach Anspruch 1, **dadurch gekennzeichnet, daß** das erste abbildende optische System (10) eine Abbildungs-Optik (12) mit zusätzlichen Strahlablenk-Gliedern (14) ist, die jeweils den einzelnen Pupillen-Bereichen (24,26,28,30) vorgeschalteten sind.

3. Einrichtung nach Anspruch 2, **dadurch gekennzeichnet, daß** die Abbildungs-Optik (12) ein Linsensystem ist und die Strahlablenk-Glieder von einer Prismen-Struktur (14) gebildet sind.

4. Einrichtung nach Anspruch 3, **dadurch gekennzeichnet, daß** die Prismen-Struktur (14) eine Pyramide ist.

5. Einrichtung nach einem der Ansprüche 1 bis 4, **dadurch gekennzeichnet, daß** das strahlablenkende, mikrooptische Strahlablenk-Element (36) ein mikromechanisches Spiegel-Raster ist.

6. Einrichtung nach Anspruch 1, **dadurch gekennzeichnet, daß** in dem ersten abbildenden optischen System (10) die Pupillen-Bereiche von Sektoren gebildet sind, in denen unterschiedliche sektorförmige Linsensysteme (44,46) angeordnet sind.

7. Einrichtung nach Anspruch 6, **dadurch gekennzeichnet, daß** die sektorförmigen Linsensysteme (44,46) unterschiedliche Brennweiten besitzen.

## Claims

1. Device for observing a field of view by means of an image-resolving detector (42), wherein the field of view is subdivided into partial fields of view, which are sequentially imaged by an optical system on the image resolving detector.
**characterised by**
(a) a first imaging optical system (10), in the pupil of which a plurality of pupil areas (24,26,28,30) is formed, each of these areas imaging a partial field of view on a common image plane area (32).
(b) a beam-deflecting, micro-optical beam deflecting element (36) arranged in the common image plane area (32),
(c) a second imaging optical system (40), by which the micro-optical beam deflecting element (36) is imaged on the image-resolving detector (42),
(d) the micro-optical beam deflecting element (36) being controlled to sequentially direct radiation from the various pupil areas (24,26,28,30) onto the second optical system (40)

2. Device as claimed in claim 1, **characterised in that** the first imaging optical system (10) is an imaging optical system (12) with additional beam deflecting elements (14), which are arranged in front of the respective individual pupil areas (24,26,28,30).

3. Device as claimed in claim 2, **characterised in that** the imaging optical system (12) is a lens system, and the beam deflecting elements are formed by a prism structure (14).

4. Device as claimed in claim 3, **characterised in that** the prism structure (14) is a pyramid.

5. Device as claimed in anyone of the claims 1 to 4, **characterised in that** the beam-deflecting, micro-optical beam deflecting element is a micro-mechanic mirror raster.

6. Device as claimed in claim 1, **characterised in that,** in the first imaging optical system (10), the pupil areas are sectors in which different, sector-shaped lens systems (44,46) are arranged.

7. Device as claimed in claim 6, **characterised in that** the sector-shaped lens systems (44,46) have different focal lengths.

## Revendications

1. Dispositif destiné à saisir un champ visuel au moyen d'un détecteur à résolution d'images (42) pour lequel le champ visuel est subdivisé en champs visuels partiels qui sont susceptibles d'être reproduits, en une succession chronologique, sur un détecteur à résolution d'images (42) par un système optique,
**caractérisé par**
(a) un premier système optique de reproduction (10) dans la pupille duquel plusieurs domaines de pupille sont formés, chaque domaine de pupille (24,26,28,30) reproduisant un champ visuel partiel sur un domaine de plan d'image commun (32),
(b) un élément de déviation de rayon micro-optique (36), déviant le rayon et disposé dans le domaine de plan d'image commun (32),
(c) un second système optique de reproduction (40) grâce auquel l'élément de déviation de rayon micro-optique (36) est susceptible d'être reproduit sur le détecteur à résolution d'image (42),
(d) l'élément de déviation de rayon micro-optique (36) étant susceptible d'être commandé de sorte qu'il dévie successivement le rayonnement provenant des différents domaines de pupille (24,26,28,30) vers le second système optique de reproduction (40).

2. Dispositif selon la revendication 1, **caractérisé en ce que** le premier système optique de reproduction (10) est un système optique de reproduction (12) muni d'organes de déviation de rayon supplémentaires (14) qui sont placés à chaque fois devant chacun des domaines de pupille (24,26,28,30).

3. Dispositif selon la revendication 2, **caractérisé en ce que** le dispositif optique de reproduction (12) est un système de lentille et les organes de déviation de rayon sont formés par une structure en prisme (14).

4. Dispositif selon la revendication 3, **caractérisé en ce que** la structure en prisme (14) est une pyramide.

5. Dispositif selon l'une quelconque des revendications 1 à 4, **caractérisé en ce que** l'élément de déviation de rayon micro-optique (36), déviant le rayon, est une grille de miroirs micromécaniques.

6. Dispositif selon la revendication 1, **caractérisé en ce que** les domaines de pupille sont formés, dans le premier système optique de reproduction (10), par des secteurs dans lesquels sont disposés différents systèmes de lentille (44,46) en forme de secteur.

7. Dispositif selon la revendication 6, **caractérisé en ce que** les systèmes de lentille (44,46) en forme de secteur possèdent différentes distances focales.
